Europäisches Patentamt

European Patent Office

Office européen des brevets

(11) Publication number: **0 153 773**
**A2**

(12) **EUROPEAN PATENT APPLICATION**

(21) Application number: **85200113.0**

(22) Date of filing: **04.02.85**

(51) Int. Cl.⁴: **F 16 L 37/22**
**F 16 L 37/10**

(30) Priority **23.02.84 IT 1975084**

(43) Date of publication of application:
**04.09.85 Bulletin 85/36**

(84) Designated Contracting States:
**BE DE FR GB IT NL**

(71) Applicant **Bormioli, Giorgio**
**Via Galileo Galilei 11**
**I-35100 Padova(IT)**

(72) Inventor **Bormioli, Giorgio**
**Via Galileo Galilei 11**
**I-35100 Padova(IT)**

(74) Representative: **Mittler, Enrico et al,**
**MARCHI & MITTLER s.r.l. Viale Lombardia, 20**
**I-20131 Milano(IT)**

(54) **Quick-connecting device for pipes.**

(57) Two tubular connecting parts (1, 2) which may be inserted into one another may be connected to one another by means of locking segments (11) circumferentially distributed in a plane perpendicular to the axis of said connecting parts (1, 2) and radially displaceable between locking and unlocking positions. The displacement of the locking segments (11) is controlled through a rotatable ring (13) which surrounds said segments (11).

Fig.1

EP 0 153 773 A2

"Quick-connecting device for pipes"

\* \* \* \* \*

The present invention relates to a quick-connecting device for pipes.

There are many cases in which it is requested to carry out the quick-connection of two pipes, as well as their quick-separation. For example, this is the case of the pipes used for transferring fluid oil products in difficult, sometimes dangerous, environmental condition, such as in open sea or from sea to land and viceversa.

There are also a number of presently known devices for carrying out the two above said operations. Some of them have also been the subject matter of a patent of the same Applicant. Object of the present invention is now to realize a quick-connecting device for pipes, which is distinguished from the known solutions in such a way as to show particular advantages of constructional and functional simplicity, at the same time being rapid and sure.

According to the invention such an object has been reached by a quick-connecting device, comprising two tubular connecting parts which may be fixed to respective pipes to be connected and quick-coupling and releasing means for said connecting parts, characterized in that said quick-coupling and releasing means comprise a plurality of locking segments circumferentially distributed in a plane perpendicular to the axis of said connecting parts and housed in radially displaceable manner in respective radial windows of a projecting axial portion of a first connecting part which, during the coupling operation, may be superimposed to a corresponding projecting axial portion of the second connecting part, and a rotatable ring which may be driven to rotate around said projecting portion of the first connecting part to act on said locking segments in such a way as to thrust them into radial seats of said projecting portion of the second connecting part or to receive them in its own radial seats, respectively for coupling or releasing said connecting parts.

An embodiment of the device according to the invention is illustrated for better clarity, but without any limitative intention in the enclosed drawings, in which:

Fig. 1 shows a quick-connecting device according to the invention, in coupled position, axially sectioned along line I-I of Fig. 2;

Fig. 2 shows said device in cross-section along line II-II of Fig. 1;

Fig. 3 shows a detail of said device in section along line III-III of Fig. 2.

With reference to the drawings, the quick-connecting device shown therein comprises a first tubular connecting part 1 and a second tubular connecting part 2, each of which is formed by a flanged portion 3, 4 and by a projecting axial portion 5, 6. The flanged portions 3, 4 are destined for the fastening, through screws 7, 8, to respective pipes to be connected. The projecting portions, 6, 5, in their turn, may be inserted into each other to define a single cylindrical passage 9 for the fluid flow from a pipe to the other along the common axis 10.

The mutual connection of the two connecting parts 1 and 2, and therefore of the two pipes which have previously been fixed thereto, is performed by quick-coupling and releasing means, which include a plurality of locking segments 11 circumferentially distributed in a plane perpendicular to the flow axis 10 and housed in radially displaceable manner in respective radial windows 12 of the projecting portion 5 of the connecting part 1.

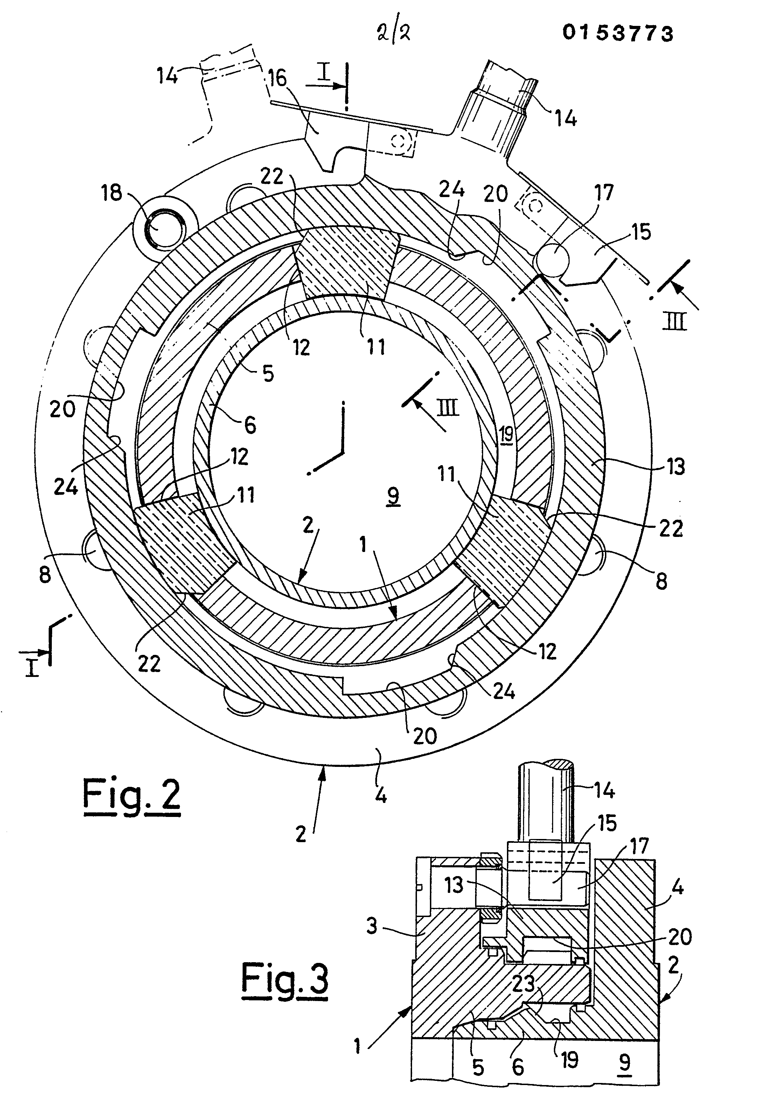

Around the circumferential succession of locking segments 11, there is arranged on the connecting part 1 a rotatable ring 13, which may be driven to rotate by an integral control rod 14 and may be blocked, on the other hand, in the two end positions illustrated in solid line and in dash-dot line in Fig. 2 by hooking of pawls 15, 16 on respective pins 17, 18 fixed to the connecting part 1 (Figs. 2 and 3).

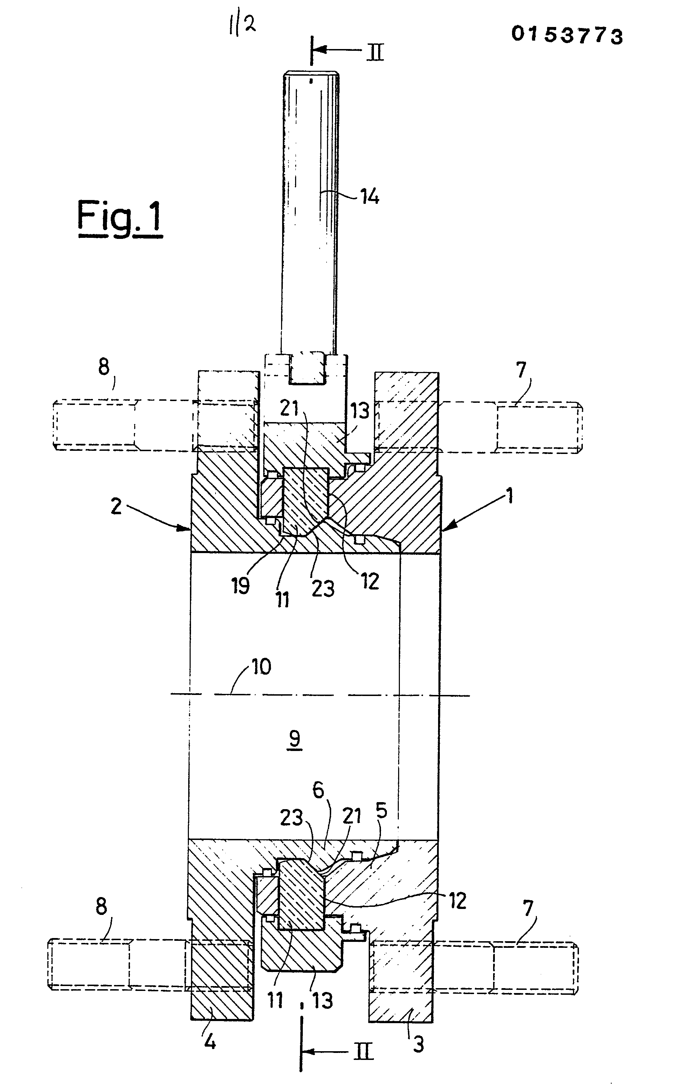

As shown in Fig. 2, the inner wall of the rotatable ring 13 cooperates with the end wall of the segments 11 to thrust them towards the flow axis 10 and inside radial seats formed as a continuous cavity 19 in the outer wall of the projecting portion 4 of the connecting part 2. In the same inner wall of the rotatable ring 13, on the other hand, there are formed some radial seats 20 (one for each segment 11), which, with the ring 13 rotated with respect to the position of Fig. 2, are able to receive the segments 11 for their exit from the annular seat 19 of the connecting part 2. Bevels 21 and 22 of the segments 11 cooperate with corresponding bevels 23 and 24 of the seats 19 and 20 (Figs. 1 and 2) to make easier the radial movement of the segments 11, as will be explained later.

The mode of operation of the quick-connecting device illustrated in the drawings is soon explained. With the control rod 14 blocked in the position shown in solid line in Fig. 2 by the hooking engagement of the pawl 15 with the pin 17, the rotatable ring 13 in its turn is blocked in such a position that its inner wall thrusts and keeps the blocking segments 11 (housed in the windows 12 of the connecting part 1) inserted in the annular seat 19 of the connecting part 2. The two connecting parts 1 and 2 are thus firmly coupled to one another, and the same holds true consequently for the two pipes fixed to the two connecting parts. The common passage 9 allows the transfer of the concerned fluid product from one to other pipe.

For the quick-separation of the two pipes it is sufficient to move (manually or hydraulically) the control rod 14 to the position shown in dash-dot line in Fig. 2, obviously after having disengaged the pawl 15 from the pin 17 and up to the engagement of the other pawl 16 with the other pin 18. By so doing, it is caused the simultaneous rotation of the rotatable ring 13, whose radial seats 20 are thus brought in front of the movable segments 11. At that point, an axial separation stress imparted by the two pipes to the corresponding connecting parts 1 and 2 is sufficient to cause, thanks to the cooperating bevels 21 and 23 of the segments 11 and of the annular seat 19, the radial diplacement of the segments 11 out of the seat 19 and inside the seats 20 of the rotatable ring 13 with consequent mutual disengagement, and therefore separation, of the connecting parts 1 and 2 and of the pipes fixed thereto.

For a new rapid connection of the same pipes, on the other hand, it is sufficient to reinsert the projecting axial portions 4 and 3 of the two connecting parts 2 and 1 into each other and then to return rapidly the control rod 14 to the position shown in solid line in Fig. 2, so as to restore the engagement between the inner wall of the rotatable ring 13 and the locking segments 11. The latter then move again into the annular seat 19 of the connecting part 2, this movement being made easier by the cooperation of the bevels 22 of the segments 11 with the bevels 24 of the seats 20. The two connecting parts 1 and 2, and

0153773

therefore the two pipes, thus remain firmly united to each other. The new engagement of the pawl 15 with the pin 17 makes this union firm.

- 1 -

0153773

CLAIMS

1. Quick-connecting device for pipes, comprising two tubular connecting parts (1, 2) which may be fixed to respective pipes to be connected and quick-coupling and releasing means (11, 12, 13) for said connecting parts, characterized in that said quick-coupling and releasing means (11, 12, 13) comprising a plurality of locking segments (11) circumferentially distributed in a plane perpendicular to the axis of said connecting parts (1, 2) and housed in radially displaceable manner in respective radial windows (12) of a projecting axial portion (5) of a first connecting part (1) which, during the coupling operation, may be superimposed to a corresponding projecting axial portion (6) of the second connecting part (2), and a rotatable ring (13) which may be driven to rotate around said projecting portion (5) of the first connecting part (1) to act on said locking segments (11) in such a way as to thrust them into radial seats (19) of said projecting portion (6) of the second connecting part (2) or to receive them in its own radial seats (20), respectively for coupling or releasing said connecting parts (1, 2).

2. Device according to claim 1, characterized in that said radial seats (19) of the projecting portion (6) of said second connecting part (2) are formed as a single annular cavity.

3. Device according to claim 1, characterized in that it comprises releasable blocking means (15, 16; 17, 18) for blocking said rotatable ring (13) in two and angular positions corresponding to the coupled and released conditions of said connecting parts (1, 2).

Fig.1

0153773

**Fig.2**

**Fig.3**